# EUROPÄISCHE PATENTSCHRIFT

(11) **EP 1 602 564 B1**
(45) Veröffentlichungstag und Bekanntmachung des Hinweises auf die Patenterteilung: **06.08.2008**
(21) Anmeldenummer: 05011932.0
(22) Anmeldetag: 02.06.2005
(51) Int. Cl.: B62D 25/08

(54) **Kraftfahrzeug**
Motor vehicle
Véhicule automobile

(30) Priorität: 04.06.2004 DE 102004027377
(43) Veröffentlichungstag der Anmeldung: 07.12.2005
(73) Patentinhaber: Bayerische Motoren Werke Aktiengesellschaft, 80809 München (DE)
(72) Erfinder: Baer, Carmen, 80807 München (DE)

(56) Entgegenhaltungen:
- EP-A- 0 285 131
- EP-A- 0 435 197
- WO-A-20/05056372
- DE-A1- 10 342 807
- DE-A1- 19 642 820

## Beschreibung

Die Erfindung betrifft ein Kraftfahrzeug gemäß dem Oberbegriff des Anspruchs 1.

Es ist bereits ein Kraftfahrzeug mit einer selbsttragenden Karosserie bekannt, bei dem an einer Bodengruppe der Karosserie zwei gegenüberliegende Längsträger vorgesehen sind.

Es ist auch bekannt, die Längsträger durch Querträger miteinander zu verbinden, um die Steifigkeit zu erhöhen.

Ferner sind Kraftfahrzeuge bekannt, beispielsweise Cabriolets oder Fahrzeuge mit einem großen Dachausschnitt oder Fahrzeuge mit einem sich direkt an den Fahrzeuginnenraum anschließenden Laderaum, bei denen zur Erhöhung der Torsionssteifigkeit, Zug-/Druckstreben vorgesehen sind, die zwischen den Längsträgern und der Karosserie angeordnet sind.

Aus der DE 103 42 807 A1 ist bereits ein gattungsbildendes Kraftfahrzeug mit einer selbsttragenden Karosserie bekannt, bei der an einem Fahrzeugheck zwei voneinander beabstandete Längsträger über zwei voneinander beabstandete Querträger miteinander verbunden sind. Der hintere Querträger verläuft in Höhe jeweils einer Dämpferaufnahme, die jeweils in einem Radhaus ausgebildet ist. Zur Aufnahme der über die jeweilige Dämpferaufnahme in das Radhaus eingeleiteten Kräfte, sind Verstärkungen an dem jeweiligen Radhaus ausgebildet.

Aus der WO 2005/056372 A1 ist ebenfalls ein Kraftfahrzeug mit einer selbsttragenden Karosserie bekannt, bei dem an einem Fahrzeugheck zwei gegenüberliegende Längsträger durch zwei voneinander beabstandete Querträger miteinander verbunden sind. Der vordere Querträger ist zwischen Hinterradaufhängungen bzw. zwischen Hinterradabstützungen angeordnet.

Aufgabe der Erfindung ist es, ein Kraftfahrzeug mit einer Versteifung des Heckbereichs zu schaffen, wobei die Versteifung einen einfachen Aufbau aufweist.

Diese Aufgabe wird durch die Merkmale des Anspruchs 1 gelöst.

Bei dem erfindungsgemäßen Kraftfahrzeug ist ein Trägerverbund in einem Fahrzeugheck vorgesehen, bei dem in Fahrzeuglängsrichtung wirkende Kräfte durch zwei voneinander beabstandete Längsträger, in Fahrzeugquerrichtung wirkende Kräfte durch zwei voneinander beabstandete Querträger und Torsionskräfte durch zwei voneinander beabstandete Radhausträger übertragen werden. Bei dem erfindungsgemäßen Trägerverbund sind die Längsträger, die Querträger und die Radhausträger miteinander verbunden.

Durch den erfindungsgemäßen Aufbau werden bei einem Auffahrunfall die auftretenden Kräfte, die über einen Stoßfänger auf die hinteren Enden der Längsträger wirken, in dem Trägerverbund zu einem großen Anteil aufgenommen, indem die Kräfte auf die beidseitigen Radhausträger und die beiden Querträger verteilt und somit nicht an die Fahrgastzelle weitergeleitet werden. Dadurch ergibt sich eine zusätzliche Erhöhung der Steifigkeit, insbesondere der Torsionssteifigkeit, des Heckbereichs.

In einer vorteilhaften Ausführungsform sind bei dem erfindungsgemäßen Trägerverbund die beiden hinteren Enden der Längsträger durch die beiden voneinander beabstandeten Querträger miteinander verbunden. Der Abstand zwischen den erfindungsgemäßen Querträgern entspricht ungefähr einer in Fahrzeuglängsrichtung verlaufenden Länge eines Radhauses. Die erfindungsgemäßen Querträger sind in einer vorteilhaften Ausführungsform ungefähr in Höhe eines vorderen und hinteren Endes des jeweiligen Radhauses an den Längsträgern oder/und gegebenenfalls an einem Ende eines Radhausträgers angeordnet.

Die beiden erfindungsgemäßen Radhausträger erstrecken sich im Wesentlichen in einer vertikalen Ebene. Vorteilhafterweise sind beide Radhausträger jeweils als ein zumindest abschnittsweise geschlossenes Hohlprofil gebildet. Das Hohlprofil besteht in einer vorteilhaften Ausführungsform aus einem Abschnitt einer Radhauswandung und einem zusätzlichen, der Form des Radhauses entsprechend angepassten Radhausträgerprofil. Die voneinander beabstandeten Enden des jeweiligen erfindungsgemäßen Hohlprofils bzw. zumindest die voneinander beabstandeten Enden des jeweiligen Radhausträgerprofils sind in einer vorteilhaften Ausführungsform jeweils in Höhe des betreffenden Längsträgers und der jeweiligen Enden der Querträger zumindest am betreffenden Längsträger befestigt. Dadurch ergibt sich ein kompakter, in sich geschlossener Aufbau.

In einer vorteilhaften Ausführungsform weist der Radhausträger ein offenes Radhausträgerprofil auf, das beispielsweise einen in etwa rechteckförmigen oder U-förmigen Querschnitt hat und in der Seitenansicht kreisförmig oder rechteckförmig entsprechend der Form des Radhauses ausgebildet ist. Das offene Profil ist an einer einem Fahrzeugrad zugewandten Radhauswand und an der betreffenden Oberfläche des Längsträgers über geeignete Befestigungsmaßnahmen, wie beispielsweise Kleben oder Schweißen oder dergleichen, befestigt.

In einer vorteilhaften Ausführungsform ist an dem jeweiligen Radhausträgerprofil ein zusätzliches Hohlprofil befestigt, das mit dem vorderen Querträger verbunden oder an diesem ausgebildet ist und das zusätzlich an dem Längsträger befestigt ist.

Vorteilhafterweise ist der erfindungsgemäße vordere Querträger ein geschlossenes Hohlprofil. Das Hohlprofil des vorderen Querträgers erstreckt sich in einer vorteilhaften Ausführungsform von einem Kofferraumboden bis zu einem Boden eines Fahrzeuginnenraumes.

Der erfindungsgemäße hintere Querträger ist in einer vorteilhaften Ausführungsform als ein offenes Profil mit einem beispielsweise U-förmigen Querschnitt ausgebildet.

In einer vorteilhaften Ausführungsform dient der am jeweiligen Radhaus ausgebildete Radhausträger zusätzlich als Aufnahme für ein Fahrzeugbauteil, wie beispielsweise eine Feder-/Dämpfereinheit. Zu diesem Zweck ist an dem erfindungsgemäßen Radhausträger bzw. zumindest am Radhausträgerprofil eine Befestigungsfläche mit einer Durchgangsöffnung vorgesehen.

Zur Erhöhung der Steifigkeit und Festigkeit weist die Befestigungsfläche des Radhausträgers einen zusätzlichen Verstärkungsabschnitt auf. Vorteilhafterweise ist der Verstärkungsabschnitt ein zusätzliches Profil, das zumindest die Wandstärke des Radhausträgerprofils erhöht oder mit diesem ein Hohlprofil bildet. Durch den zusätzlichen Verstärkungsabschnitt können die durch die Feder-/Dämpfereinheit auf den erfindungsgemäßen Radhausträger einwirkenden Kräfte sicher aufgenommen werden.

Eine Ausführungsform der Erfindung wird nachstehend anhand der Zeichnungen beispielshalber beschrieben. Dabei zeigen:
- Fig. 1: eine perspektivische Ansicht eines an einem Fahrzeugheck ausgebildeten Trägerverbundes,
- Fig. 2: eine perspektivische Ansicht des Fahrzeughecks, bei dem ein in einem Radhaus ausgebildeter Radhausträger dargestellt ist, an dem ein Stoßdämpfer befestigt ist,
- Fig. 3: eine Ansicht von oben auf das in der Fig. 2 gezeigte Fahrzeugheck, in der zusätzlich ein Kraftfluss der bei einem Heckaufprall entstehenden Kräfte eingezeichnet ist,
- Fig. 4: eine teilweise geschnittene, perspektivische Ansicht einer Seite des Fahrzeughecks, aus der die Querschnitte der beiden Querträger hervorgehen, wobei in der Fig. 4 zusätzlich ein Kraftfluss der bei einem Heckaufprall entstehenden Kräfte eingezeichnet ist, und
- Fig. 5: eine perspektivische Darstellung eines Radhauses, in der die Verstärkung der Befestigungsfläche für eine Dämpfereinheit dargestellt ist.

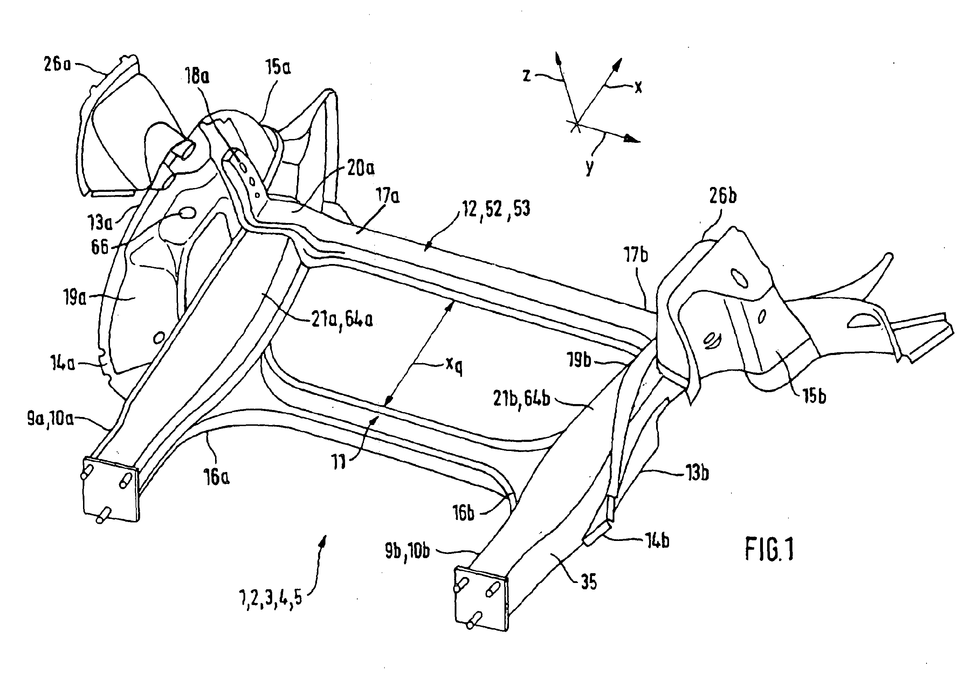

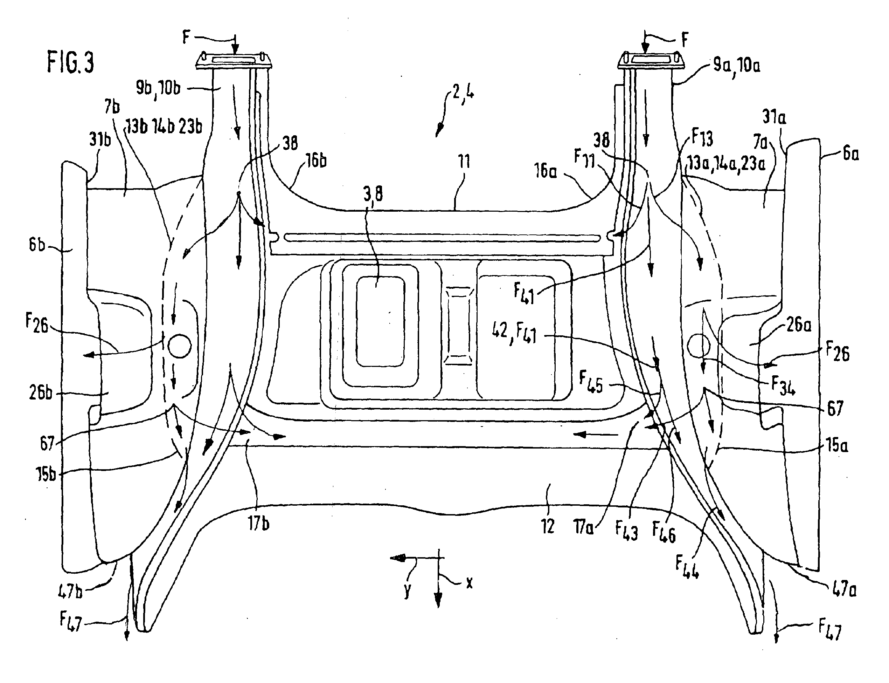

Die Fig. 1 zeigt einen Trägerverbund 1, der an einem Heckbereich 2 unterhalb eines Kofferraums oder Laderaums 3 eines nicht weiter dargestellten Kraftfahrzeuges 4 mit einer selbsttragenden Karosserie 5 ausgebildet ist. Die selbsttragende Karosserie 5 weist in der Fig. 3 teilweise dargestellte gegenüberliegende Seitenrahmen 6a und 6b auf, an denen Radhäuser 7a und 7b befestigt sind. Die beiden Seitenrahmen 6a und 6b sind zumindest über eine Bodengruppe 8 an ihren unteren Enden und mit einem Dach an ihren oberen Enden miteinander verbunden.

An der Bodengruppe 8 sind zwei Längsträger 9a und 9b vorgesehen, die sich in der Regel über die gesamte Fahrzeuglänge in Fahrzeuglängsrichtung x erstrecken. An den hinteren Enden 10a und 10b der Längsträger 9a und 9b sind ein hinterer Querträger 11 und ein davon beabstandeter vorderer Querträger 12 vorgesehen. Die Querträger 11 und 12 verbinden die beiden Längsträger 9a und 9b miteinander.

Die beiden Querträger 11 und 12 bilden mit dazwischenliegenden Abschnitten 64a und 64b der Längsträger 9a, 9b eine in etwa waagrechte Ebene, die sich in Fahrzeuglängsrichtung x und in Fahrzeugquerrichtung y erstreckt.

Ein Abstand x_{q} in Fahrzeuglängsrichtung x zwischen den beiden Querträgern 11 und 12 ist in der in der Fig. 1 gezeigten Ausführungsform durch den Abstand gegenüberliegender Enden 14a und 15a bzw. 14b und 15b jeweils eines seitlich an einem Längsträger 9a, 9b angeordneten Radhausträgerprofils 13a bzw. 13b bestimmt. Die Enden 14a und 15a bzw. 14b und 15b der Radhausträgerprofile 13a und 13b liegen entsprechenden Enden 16a und 16b des hinteren Querträgers 11 bzw. Enden 17a und 17b des vorderen Querträgers 12 gegenüber.

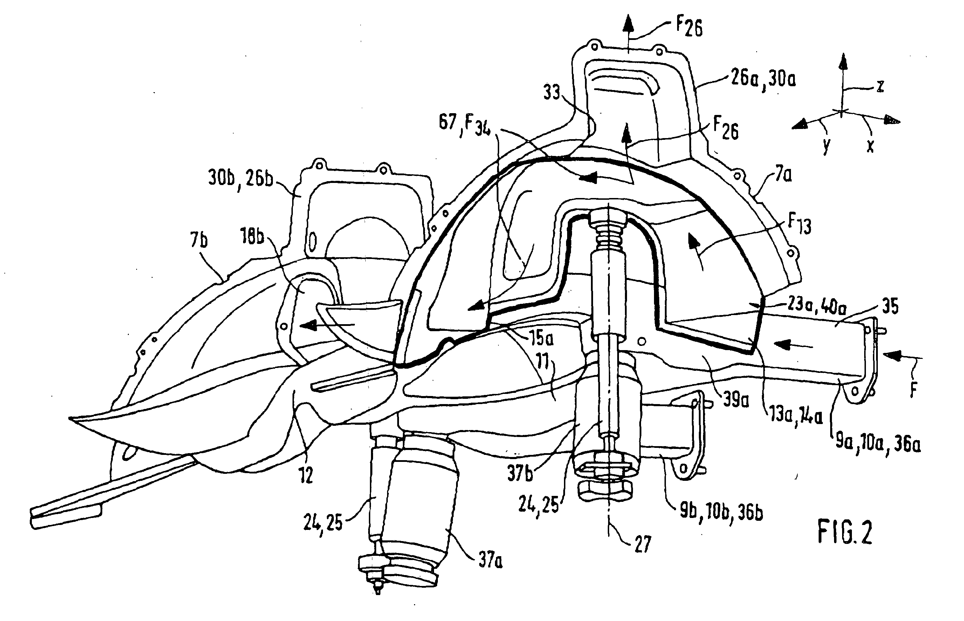

Die Radhausträgerprofile 13a und 13b sind in Fahrzeugquerrichtung y gesehen, wie dies aus den Fig. 1, 2, 4, 5 ersichtlich ist, bogenförmig oder rechteckförmig. Wie aus der Fig. 2 hervorgeht, bildet das jeweilige Radhausträgerprofil 13a, 13b mit einer äußeren Wand 39a, 39b des entsprechenden Radhauses 7a und 7b ein Hohlprofil 40a, 40b. Das Hohlprofil 40a, 40b ist in der Funktion als ein Kraftübertragungselement auch als Radhausträger 23 bezeichnet.

Zwischen den Radhausträgerprofilen 13a und 13b und dem vorderen Querträger 12 besteht eine zusätzliche Verbindung in Form eines Profilabschnittes 18a und 18b. Die jeweiligen Profilabschnitte 18a und 18b erstrecken sich teilweise in senkrechter Richtung z in Höhe des jeweiligen vorderen Endes 15a und 15b des entsprechenden Radhausträgerprofils 13a, 13b.

Mit einer zur Fahrzeugmitte zugewandten Wand 19a und 19b des jeweiligen Radhausträgerprofils 13a und 13b bildet der jeweilige Profilabschnitt 18a und 18b ein Hohlprofil 49. Der Profilabschnitt 18a, 18b weist in der gezeigten Ausführungsform eine Stufe 20a, 20b auf, durch die der Profilabschnitt 18a, 18b mit einer Oberfläche 21 a, 21 b des jeweiligen Längsträgers 9a und 9b verbunden ist.

In einer Ausführungsform sind die Profilabschnitte 18a und 18b als separates Bauteil ausgebildet und an den Enden 17a und 17b des vorderen Querträgers 12 befestigt. In einer anderen Ausführungsform sind die Profilabschnitte 18a und 18b einstückig an dem vorderen Querträger 12 ausgebildet.

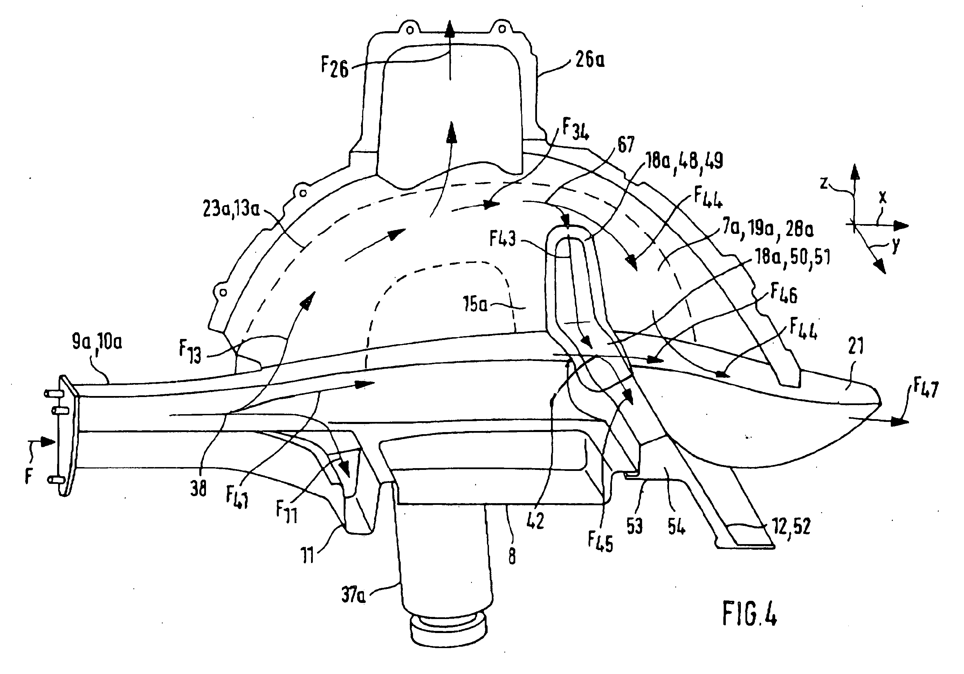

Aus der Fig. 1 geht hervor, dass der hintere Querträger 11 ein nach oben hin offenes Profil mit einem U-förmigen Querschnitt aufweist. Der vordere Querträger 12 ist ein geschlossenes Hohlprofil mit einem Hohlraum 54, das beispielsweise aus zwei miteinander verbundenen Profilen 52 und 53 gebildet ist, wie dies in der Fig. 4 gezeigt ist.

Aus der Darstellung der Fig. 2 ist erkennbar, dass an dem jeweiligen Radhausträgerprofil 13a und 13b ein Fahrzeugbauteil 24, im vorliegenden Fall ein Stoßdämpfer 25, befestigt ist. Der sichtbare Außenrand des Radhausträgerprofils 13a ist in der Fig. 2 durch eine breitere Linie hervorgehoben. Ferner ist an jeweils einer Unterseite 36a, 36b des Längsträgers 9a und 9b in der Nähe des hinteren Querträgers 11 eine Feder 37a, 37b angeordnet.

An dem Radhausträgerprofil 13a und 13b ist zusätzlich ein Verstärkungsprofil 26a und 26b angeordnet. Das Verstärkungsprofil 26a und 26b ist ungefähr in Verlängerung einer Längsachse 27 des Stoßdämpfers 25 auf der Außenfläche der Wand 19a und 19b des Radhausträgerprofils 13a und 13b befestigt.

Das jeweilige Verstärkungsprofil 26a und 26 ist über einen U-förmigen Flansch an einer entsprechenden Innenwand 31 a, 31 b des Seitenrahmens 6a, 6b befestigt. An dem Verstärkungsprofil 26a, 26b verbleibt eine nach unten zeigende Öffnung 33, die beispielsweise durch eine Blende verschlossen wird. Der von dem Verstärkungsprofil 26a und 26b, dem Seitenrahmen 6a und 6b und der Blende umschlossene Hohlraum ist in der gezeigten Ausführungsform quader- oder würfelförmig.

In der Fig. 2 ist ein Kraftfluss einer auf die Enden 10a, 10b der Längsträger 9a, 9b einwirkenden Kraft F, die beispielsweise bei einem Heckaufprall entsteht, eingezeichnet. Die Kraft F wird mit einem Kraftanteil F₁₃ von dem Radhausträger 23a, 23b übertragen. Die von dem hinteren Ende 14a, 14b des Radhausträgers 23a, 23b kommende Kraft F₁₃ wird mit einem Kraftanteil F₂₆ über das Verstärkungsprofil 26a, 26b in den Seitenrahmen 6a, 6b weitergeleitet. Ein verbleibender Kraftanteil F₃₄ wirkt auf vordere Ende 15a, 15b des Radhausträgers 23a, 23b

Die Fig. 3 zeigt eine Ansicht von oben auf den Heckbereich 2 des Kraftfahrzeuges 4. Bei dieser Ansicht ist ein Teil der Bodengruppe 8, die den Boden des Kofferraumes 3 bildet, dargestellt. Ferner sind in der Fig. 3 vom Trägerverbund 1 die beiden Längsträger 9a, 9b, der hintere Querträger 11 und der vordere Querträger 12 erkennbar. Die beiden Radhausträgerprofile 13a und 13b bzw. Radhausträger 23a, 23b sind in der Fig. 3 in strichlierten Linien eingezeichnet.

Die beispielsweise bei einem Fahrzeugaufprall auf die hinteren Enden 10a, 10b der Längsträger 9a, 9b wirkende Kraft F wird an einer Verzweigungsstelle 38 des Trägerverbundes 1 in Höhe der Enden 16a, 16b des hinteren Querträgers 11 und der unteren Enden 14a, 14b der Radhausträgerprofile 13a, 13b in die Kräfte F₁₃, F₁₁ und F₄₁ aufgeteilt. Die Kraft F₁₁ wird in den hinteren Querträger 11 eingeleitet. Die F₁₃ wird durch die betreffenden Radhausträger 23a, 23b aufgenommen.

Eine verbleibende Kraft F₄₁ wird über den Längsträger 9a, 9b weiter bis zur nächsten Verzweigungsstelle 42 des Trägerverbundes 1 in Höhe der Enden 17a, 17b des vorderen Querträgers 12 und der unteren Enden 15a, 15b des Radhausträgerprofils 13a, 13b geleitet. Die Kraft F₄₁ wird in eine Kraft F₄₅ und eine Kraft F₄₆ aufgeteilt. Die Kraft F₄₅ wird durch den vorderen Querträger 12 aufgenommen. Die Kraft F₄₆ wird durch den Längsträger 9a, 9b übertragen.

Die von dem jeweiligen Radhausträger 23a, 23b kommende Kraft F₃₄ wird an einer Verzweigungsstelle 67 am Ende 15a, 15b des Radhausträgers 23 in eine Kraft F₄₃ und eine Kraft F₄₄ aufgeteilt. Die Kraft F₄₃ wird über das Verstärkungsprofil 18a, 18b auf den vorderen Querträger 12 übertragen. Die Kraft F₄₄ wird über eine vom Fahrzeug abgewandte Außenwand 35 des Längsträgers 9a, 9b in den jeweiligen Längsträger 9a, 9b eingeleitet.

Am jeweiligen vorderen Ende 47a, 47b des Radhauses 7a, 7b verbleibt eine Restkraft F₄₇ , die von dem jeweiligen Längsträger 9a, 9b weitergeleitet wird. Die in den jeweiligen Längsträger 9a, 9b eingeleitete Aufprallkraft F ist am jeweiligen vorderen Ende 47a, 47b des Radhauses 7a, 7b in Bezug auf die Restkraft F₄₇ entsprechend der Gleichung F = a x F₄₇ um einen Faktor a verringert. Der Faktor a liegt bei a = 1,2 bis 1,8.

Die Fig. 4 zeigt die Lage und Form des als Verstärkung dienenden Profilabschnitts 18a, bei dem ein Teilabschnitt 48 am vorderen Ende 15a des gestrichelt eingezeichneten Radhausträgerprofil 13a befestigt ist. Der Teilabschnitt 48 ist an der zur Fahrzeugmitte gewandten Außenfläche 28a, 28b der Wand 19a, 19b des Radhausträgerprofils 13a unter Bildung des Hohlprofils 49 befestigt. An den Teilabschnitt 48 schließt sich ein Teilabschnitt 50 an, der mit der dazu gegenüberliegenden Oberfläche 21 des Längsträgers 9a ebenfalls ein Hohlprofil 51 bildet.

In der gezeigten Ausführungsform ist der vordere Querträger 12 aus den beiden Profilen 52 und 53 gebildet. Durch die beiden Profile 52 und 53 des vorderen Querträgers 12 ergibt sich der Hohlraum 54. Da die beiden Profile 52 und 53 relativ großflächig sind, bildet der vordere Querträger 12 ein Schubfeld, über das auch Torsionskräfte übertragbar sind.

Der hintere Querträger 11 ist als ein U-förmiges Profil vorgesehen, das durch ein nicht dargestelltes Abschlussprofil ebenfalls ein geschlossenes Hohlprofil bilden kann. In der Fig. 4 ist ferner der obenbeschriebene Kraftfluss eingezeichnet, der sich durch eine beispielsweise bei einem Auffahrunfall in die Enden 10a, 10b der Längsträger 9a eingeleitete Kraft F ergibt.

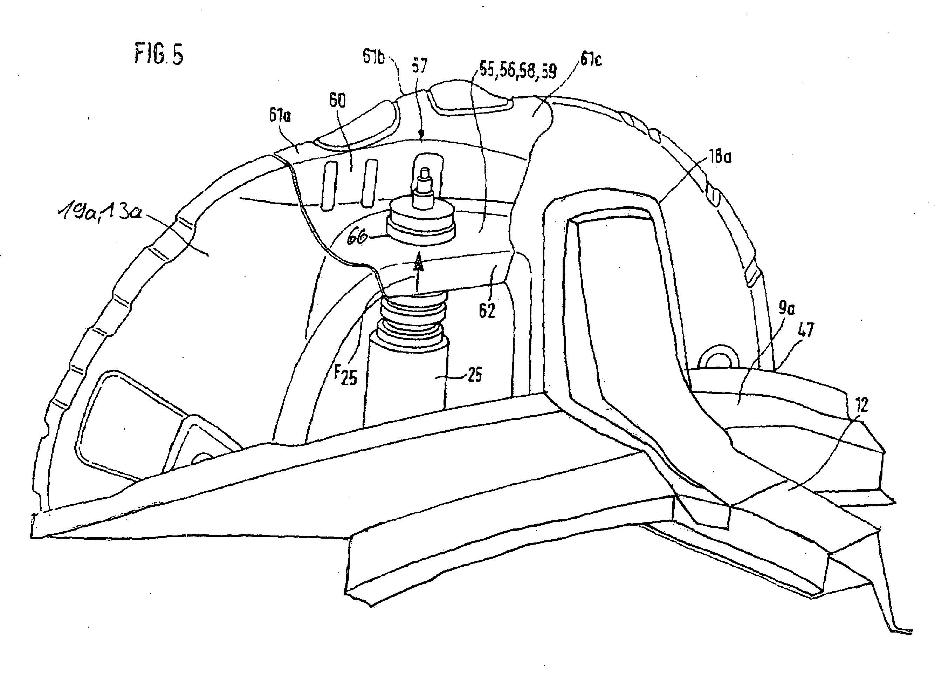

Aus der Fig. 5 geht hervor, dass das Radhausträgerprofil 13a eine nicht sichtbare Befestigungsfläche 55 mit einem im Wesentlichen ebenen Abschnitt 56 aufweist, an dem ein Verstärkungsprofil 57 befestigt ist. Das Verstärkungsprofil 57 ist ebenfalls mit einer Befestigungsfläche 58 versehen, die einen ebenen Abschnitt 59 aufweist.

Die Form und Größe des Verstärkungsprofils 57 ist so ausgelegt, dass die von dem Stoßdämpfer 25 auf die Befestigungsflächen 55 und 58 wirkenden Kräfte F₂₅ sicher aufgenommen werden. In der gezeigten Ausführungsform weist das Verstärkungsprofil 57 eine in etwa senkrechte Wand 60 und an die Wand 60 sich anschließende fingerförmige Abschnitte 61a, 61 b und 61c auf. Nach unten hin ist im Anschluss an die Befestigungsfläche 58 ein abgewinkelter, in etwa rechteckförmiger Flansch 62 vorgesehen. In den beiden Befestigungsflächen 55, 58 ist eine Durchgangsöffnung 66 ausgebildet.

## Patentansprüche

1. Kraftfahrzeug mit einer selbsttragenden Karosserie (5), die zwei gegenüberliegende Seitenrahmen (6a, 6b) aufweist, die an ihren unteren Enden über eine Bodengruppe (8) miteinander verbunden sind, mit einem Fahrzeugheck (2), an dem zwei sich gegenüberliegende Radhäuser (7a, 7b) vorgesehen sind und zwei gegenüberliegende Längsträger (9a, 9b), die an der Bodengruppe (8) ausgebildet sind und bis in das Fahrzeugheck (2) verlaufen und mit einem Stoßfänger, der an den Enden der Längsträger (9a, 9b) angeordnet ist, wobei die beiden Längsträger (9a, 9b) im Heckbereich (2) durch zwei voneinander beabstandete Querträger (11, 12) miteinander verbunden sind, **dadurch gekennzeichnet, dass** ein Trägerverbund (1) an dem Fahrzeugheck (2) vorgesehen ist, der aus den beiden voneinander beabstandeten Längsträgern (9a, 9b), den beiden voneinander beabstandeten Querträgern (11, 12) und aus zwei voneinander beabstandeten Radhausträgern (23a, 23b) gebildet ist, die miteinander verbunden sind,
dass die beiden Querträger (11, 12) in Fahrzeuglängsrichtung x in Abhängigkeit von der Länge der Radhausträger (23a, 23b) um eine Strecke x_{q} voneinander beabstandet sind,
dass der jeweilige Radhausträger (23a, 23b) als ein Hohlprofil (40a, 40b) ausgebildet ist, dass das jeweilige Hohlprofil (40a, 40b) des Radhausträgers (23a, 23b) mindestens ein hinteres Ende (14a, 14b) und ein vorderes Ende (15a und 15b) aufweist, dass die Enden (14a, 14b; 15a, 15b) des Hohlprofils (40a, 40b) des Radhausträgers (23a, 23b) ungefähr in Höhe der jeweiligen Enden (16a, 16b; 17a, 17b) des hinteren Querträgers (11) und des vorderen Querträgers (12) liegen,
und dass bei dem Trägerverbund (1) in Fahrzeuglängsrichtung x wirkende Kräfte durch die beiden Längsträger (9a, 9b), in Fahrzeugquerrichtung y wirkende Kräfte durch die beiden Querträger (11, 12) und in vertikaler Fahrzeugrichtung z wirkende Kräfte durch die beiden Radhausträger (23a, 23b) übertragen werden.

2. Kraftfahrzeug nach Anspruch 1,
**dadurch gekennzeichnet, dass** der jeweilige Radhausträger (23a, 23b) an dem jeweiligen Radhaus (7a, 7b) durch ein Radhausträgerprofil (13a, 13b) und eine Wand (39a, 39b) des Radhauses (7a, 7b) als ein Hohlprofil (40a, 40b) ausgebildet ist, und dass der jeweilige Radhausträger (23a, 23b) in etwa in einer senkrechten Ebene entsprechend der Form des jeweiligen Radhaus (7a, 7b) liegt .

3. Kraftfahrzeug nach den Ansprüchen 1 oder 2,
**dadurch gekennzeichnet, dass** die Hohlprofile (40a, 40b) des Radhausträgers (23a, 23b) mit den jeweiligen dazwischenliegenden Längsträgern (9a, 9b) und Querträgern (11, 12) aus einer Sicht in Fahrzeuglängsrichtung (x) einen U-förmigen Trägerverbund (1) bilden.

4. Kraftfahrzeug nach einem der vorhergehenden Ansprüche,
**dadurch gekennzeichnet, dass** am vorderen Endes (15a, 15b) des jeweiligen Radhausträgerprofils (13a, 13b) ein Verstärkungsabschnitt (18a, 18b) befestigt ist, der mit dem vorderen Querträger (12) verbunden ist.

5. Kraftfahrzeug nach einem der vorhergehenden Ansprüche,
**dadurch gekennzeichnet, dass** an dem Radhausträgerprofil (13a, 13b) eine Befestigungsfläche (55) mit einem ebenen Abschnitt (56) zur Befestigung eines Fahrzeugbauteils (24, 25) ausgebildet ist und dass oberhalb des ebenen Abschnitts (56) der Befestigungsfläche (55) ein Verstärkungsprofil (57) mit einer Befestigungsfläche (58) für das Fahrzeugbauteil (24) vorgesehen ist, und dass die Befestigungsfläche (58) des Verstärkungsprofils (57) einen ebenen Abschnitt (59) zur Befestigung des Fahrzeugbauteils (24) aufweist.

6. Kraftfahrzeug nach Anspruch 5,
**dadurch gekennzeichnet dass** in den beiden Befestigungsflächen (55, 58) des Radhausträgerprofils (13a, 13b) und des Verstärkungsprofils (57) jeweils eine Durchgangsöffnung (66) für ein Fahrzeugbauteil (24) ausgebildet ist.

7. Kraftfahrzeug nach einem der vorhergehenden Ansprüche,
**dadurch gekennzeichnet dass** die beiden Querträger (11, 12) und die dazwischenliegenden Abschnitte (64a und 64b) der Längsträger (9a, 9b) in einer in etwa waagrechten Ebene liegen.

8. Kraftfahrzeug nach einem der vorhergehenden Ansprüche,
**dadurch gekennzeichnet, dass** der vordere Querträger (12) ein geschlossenes Hohlprofil ist.

9. Kraftfahrzeug nach einem der vorhergehenden Ansprüche,
**dadurch gekennzeichnet, dass** der hintere Querträger (11) ein offenes Profil aufweist, das durch ein Abschlussprofil verschließbar ist.

10. Kraftfahrzeug nach Anspruch 5,
**dadurch gekennzeichnet, dass** das Fahrzeugbauteil (24) ein Stoßdämpfer (25) ist.

11. Kraftfahrzeug nach einem der vorhergehenden Ansprüche,
**dadurch gekennzeichnet, dass** der Trägerverbund (1) eine auf die Enden (10a, 10b) der Längsträger (9a, 9b) einwirkende Kraft F zumindest zum Teil durch die Hohlprofile (40a, 40b) der Radhausträger (23a, 23b) und zu einem weiteren Teil durch die beiden Querträger (11, 12) aufnimmt.

12. Kraftfahrzeug nach einem der vorhergehenden Ansprüche,
**dadurch gekennzeichnet, dass** ein am Radhausträgerprofil (13a, 13b) ausgebildeter Profilabschnitt (26a, 26b) die von dem jeweiligen Radhausträger (23a, 23b) aufgenommene Kraft F₁₃ mit einem Kraftanteil F₂₆ in den jeweiligen Seitenrahmen (6a, 6b) weiterleitet.

13. Kraftfahrzeug nach einem der vorhergehenden Ansprüche,
**dadurch gekennzeichnet, dass** der vordere Querträger (12) durch die Verwendung großflächiger Profile (52, 53) ein Schubfeld bildet, über das auch Torsionskräfte übertragbar sind.

## Claims

1. A motor vehicle with a self-supporting body (5) comprising two opposite side frames (6a, 6b) joined at their bottom ends by a floor group (8), a vehicle tail (2) on which two opposite wheel housings (7a, 7b) are provided and two opposite longitudinal members (9a, 9b) formed on the floor group (8) and extending into the vehicle tail (2), also comprising a shock-absorber on the ends of the longitudinal members (9a, 9b), wherein the two longitudinal members (9a, 9b) in the tail region (2) are connected by two spaced-apart transverse members (11, 12), **characterised in that** a junction between bearing members (1) on the vehicle tail (2) comprises the two spaced-apart longitudinal members (9a, 9b), the two spaced-apart transverse members (11, 12) and two spaced-apart wheel housing bearers (23a, 23b) connected to one another,
in the longitudinal direction (x) of the vehicle, the two transverse members (11, 12) are spaced apart by a distance (x_{q}) depending on the length of the wheel housing bearers (23a, 23b),
each wheel housing bearer (23a, 23b) is in the form of a hollow profile (40a, 40b), each hollow profile (40a, 40b) of the wheel housing bearer (23a, 23b) has at least a rear end (14a, 14b) and a front end (15a and 15b), the ends (14a, 14b; 15a, 15b) of the hollow profile (40a, 40b) of the wheel housing bearer (23a, 23b) lie approximately level with the rear ends (16a, 16b; 17a, 17b) of the rear transverse bearer (11) and the front transverse bearer (12), and
in the case of the junction (1), forces acting in the longitudinal direction (x) of the vehicle are transmitted by the two longitudinal bearers (9a, 9b), forces acting in the transverse direction (y) of the vehicle are transmitted by the two transverse members (11, 12) and forces acting in the vertical direction (z) of the vehicle are transmitted by the two wheel housing bearers (23a, 23b).

2. A motor vehicle according to claim 1,
**characterised in that** each wheel housing bearer (23a, 23b) on the respective wheel housing (7a, 7b) is formed by a bearer profile (13a, 13b) and a wall (39a, 39b) of the wheel housing (7a, 7b) is in the form of a hollow profile (40a, 40b) and each wheel housing bearer (23a, 23b) lies approximately in a vertical plane corresponding to the shape of the respective wheel housing (7a, 7b).

3. A motor vehicle according to claim 1 or claim 2,
**characterised in that** the hollow profiles (40a, 40b) of the wheel housing bearer (23a, 23b) together with the longitudinal members (9a, 9b) and transverse members (11, 12) in between form a U-shaped junction (1) as seen in the longitudinal direction (x) of the vehicle.

4. A motor vehicle according to any of the preceding claims,
**characterised in that** a reinforcing portion (18a, 18b) connected to the front transverse member (12) is fastened to the front end (1 5a, 15b) of the respective wheel housing bearer profile (1 3a, 1 3b).

5. A motor vehicle according to any of the preceding claims,
**characterised in that** a fastening surface (55) comprising a flat portion (56) is formed on the wheel housing bearer profile (13a, 13b) for fastening a component (24, 25) of the vehicle, and a reinforcing profile (57) comprising a fastening surface (58) for the component (24) is provided above the flat portion (56) of the fastening surface (55), and the fastening surface (58) of the reinforcing profile (57) has a flat portion (59) for fastening the component (24).

6. A motor vehicle according to claim 5,
**characterised in that** a passage opening (66) for a component (24) is formed in the two fastening surfaces (55, 58) of the wheel housing bearer profile (13a, 13b) and of the reinforcing profile (57).

7. A vehicle according to any of the preceding claims,
**characterised in that** the two transverse members (11, 12) and the portions (64a and 64b) of the longitudinal members (9a, 9b) in between lie in an approximately horizontal plane.

8. A motor vehicle according to any of the preceding claims,
**characterised in that** the front transverse member (12) is a closed hollow profile.

9. A motor vehicle according to any of the preceding claims,
**characterised in that** the rear transverse bearer (11) has an open profile closable by a terminal profile.

10. A motor vehicle according to claim 5,
**characterised in that** the component (24) is a shock-absorber (25).

11. A motor vehicle according to any of the preceding claims,
**characterised in that** the junction (1) receives a force (F) acting on the ends (10a, 10b) of the longitudinal members (9a, 9b) at least partly via the hollow profiles (40a, 40b) of the wheel housing bearers (23a, 23b) and partly via the two transverse members (11, 12).

12. A motor vehicle according to any of the preceding claims,
**characterised in that** a profile portion (26a, 26b) formed on the wheel housing bearer profile (13a, 13b) transmits a component (F₂₆) of the force (F₁₃) received by the respective wheel housing bearer (23a, 23b) into the respective side frame (6a, 6b).

13. A motor vehicle according to any of the preceding claims,
**characterised in that** owing to the use of large-area profiles (52, 53) the front transverse member (12) forms a thrust area via which torsional forces can also be transmitted.

## Revendications

1. °) Véhicule automobile comportant une carrosserie autoportante (5) ayant deux cadres latéraux (6a, 6b) opposés, dont les extrémités inférieures sont reliées par des ensembles de fond (8) à un arrière de véhicule (2) muni de deux caissons de roue (7a, 7b) qui se font face et deux parties longitudinales opposées (9a, 9b) réalisées sur l'ensemble de fond (8) en allant jusqu'à l'arrière (2) du véhicule et un amortisseur aux extrémités arrière de la poutre longitudinale (9a, 9b), les deux poutres longitudinales (9a, 9b) étant reliées dans la région arrière (2) par deux traverses (11, 12) écartées l'une de l'autre,
**caractérisé en ce qu'**
une combinaison de poutres (1) est prévue à l'arrière (2) du véhicule qui est formée par les deux poutres longitudinales (9a, 9b) écartées l'une de l'autre, les deux traverses (11, 12) écartées l'une de l'autre et deux supports de caisson de roue (23a, 23b) écartés l'un de l'autre,
les deux traverses (11, 12) sont écartées de la distance (x_{q}) dans la direction longitudinale (x) du véhicule, en fonction de la longueur des supports de caisson de roue (23a, 23b),
les supports de caisson de roue (23a, 23b) respectifs sont constitués par un profil creux (40a, 40b),
le profil creux (40a, 40b) respectif du support de caissons de roue (23a, 23b) ayant au moins une extrémité arrière (14a, 14b) et une extrémité avant (15a, 15b),
les extrémités (14a, 14b , 15a, 15b) du profil creux (40a, 40b) du support de caisson de roue (23a, 23b) se situant sensiblement au niveau de l'extrémité arrière respective (16a, 16b ; 17a, 17b) de la traverse arrière (11) et de la traverse avant (12) et
pour la combinaison de poutres (1), les efforts agissant dans la direction longitudinale (x) du véhicule sont transmis par les deux traverses (11, 12) aux deux poutres longitudinales (9a, 9b), dans la direction transversale du véhicule et les efforts agissant dans la direction verticale (z) du véhicule sont transmis par les deux supports de caisson de roue (23a, 23b).

2. °) Véhicule automobile selon la revendication 1,
**caractérisé en ce que**
le support de caisson de roue (13a, 23b) respectif est réalisé au niveau de chaque caisson de roue (7a, 7b) par un profil de support de caisson de roue (13a, 13b) et une paroi (39a, 39b) du caisson de roue (7a, 7b) sous la forme d'un profil creux (40a, 40b) et le support de caisson de roue (23a, 23b) respectif se situe sensiblement dans un plan vertical en fonction de la forme du caisson de roue (7a, 7b) respectif.

3. °) Véhicule automobile selon les revendications 1 ou 2,
**caractérisé en ce que**
en regardant dans la direction longitudinale (x) du véhicule les profils creux (40a, 40b) du support de caisson de roue (23a, 23b) forment avec les parties longitudinales (9a, 9b) respectives, intermédiaires, et les traverses (11, 12), une combinaison de support (1) à section en forme de U.

4. °) Véhicule automobile selon l'une des revendications précédentes,
**caractérisé en ce que**
l'extrémité avant (15a, 15b) du profil de support de caisson de roue respectif (13a, 13b) porte solidairement un segment de renforcement (18a, 18b) relié à la traverse avant (12).

5. °) Véhicule automobile selon l'une des revendications précédentes,
**caractérisé en ce qu'**
une surface de fixation (55) munie d'un segment plan (56) est prévue sur le profil de support de caisson de roue (13a, 13b) pour fixer un composant (24, 25) du véhicule et au-dessus du premier segment (56) de la patte de fixation (55) on a un profil de renforcement (57) muni d'une surface de fixation (58) pour la pièce (24) du véhicule et
la surface de fixation (58) du profil de renforcement (57) comporte un segment plan (59) pour fixer la pièce (24) du véhicule.

6. °) Véhicule automobile selon la revendication 5,
**caractérisé en ce qu'**
un orifice traversant (66) est réalisé pour un composant (24) du véhicule dans les deux surfaces de fixation (55, 56) du profil de support de caisson de roue (13a, 13b).

7. °) Véhicule automobile selon l'une des revendications précédentes,
**caractérisé en ce que**
les deux traverses (11, 12) et les segments (64a, 64b) intermédiaires des parties longitudinales (9a, 9b) se situent sensiblement dans un plan horizontal.

8. °) Véhicule automobile selon l'une des revendications précédentes,
**caractérisé en ce que**
la traverse avant (12) est un profil creux fermé.

9. °) Véhicule automobile selon l'une des revendications précédentes,
**caractérisé en ce que**
la traverse arrière (11) présente un profil ouvert qui se ferme par un profil de terminaison.

10. °) Véhicule automobile selon la revendication 5,
**caractérisé en ce que**
la pièce (24) du véhicule est un amortisseur (25).

11. °) Véhicule automobile selon l'une des revendications précédentes,
**caractérisé en ce que**
la combinaison de poutres (1) reçoit une force (F) agissant sur les extrémités (10a, 10b) des poutres longitudinales (9a, 9b) au moins en partie par l'intermédiaire des profils creux (40a, 40b) du support de caisson de roue (23a, 23b) et en partie, par les deux traverses (11, 12).

12. °) Véhicule automobile selon l'une des revendications précédentes,
**caractérisé en ce qu'**
un segment profilé (26a, 26b) formé sur le profil de support de roue (13a, 13b) transmet la force (F₁₃) reçue par le support de caisson de roue respectif (23a, 23b) avec une composante de force (F26) dans le cadre latéral (6a, 6b) respectif.

13. °) Véhicule automobile selon l'une des revendications précédentes,
**caractérisé en ce que**
la traverse avant (12) forme une zone de poussée grâce à l'utilisation de profils de grandes surfaces (52, 53), et qui transmet également des efforts de torsion.
